# EUROPEAN PATENT APPLICATION

(11) **EP 2 103 985 A1**
(43) Date of publication of application: **23.09.2009**
(21) Application number: 09155505.2
(22) Date of filing: 18.03.2009
(51) Int. Cl.: G02C 5/22, G02C 11/02

(54) **Articulation element for a hinge for spectacles, decorative element for a hinge for spectacles, and hinge for spectacles**

(30) Priority: 19.03.2008 IT UD20080006 U
(71) Applicant: Visottica Industrie S.p.A. con unico socio, 31058 Susegana (TV) (IT)
(72) Inventor: Montalban, Rinaldo, 30100, Venezia (IT)
(74) Representative: Petraz, Gilberto Luigi

(57) **Abstract**

An articulation element (13, 113, 213, 313, 413, 513, 613, 713, 15, 115, 315) for a hinge for spectacles (10, 110) is mounted on a relative component (11, 12) of a frame for spectacles. The articulation element (13, 113, 213, 313, 413, 513, 613, 713, 15, 115, 315) comprises a positioning seating (20, 120, 220, 320, 420, 520, 620, 720) inside which at least a decorative element (17, 117, 217, 317, 417, 517, 617, 717) is attached. The positioning seating (20, 120, 220, 320, 420, 520, 620, 720) is conformed so as to cooperate with a coordinated attachment portion (17a) of the decorative element (17, 117, 217, 317, 417, 517, 617, 717), defines the structural attachment of the decorative element (17, 117, 217, 317, 417, 517, 617, 717) to the articulation element (13, 113, 213, 313, 413, 513, 613, 713, 15, 115, 315), and maintains a decorative portion (17b) of the decorative element (17, 117, 217, 317, 417, 517, 617, 717) at least partly external, so as to confer a desired aesthetic identity on the articulation element (13, 113, 213, 313, 413, 513, 613, 713, 15, 115, 315).

## Description

### FIELD OF THE INVENTION

The present invention concerns an articulation element, a decorative element and a hinge for spectacles, both of the elastic type and also of the simple type, able to connect a temple to a lug or front piece of a frame for spectacles.

### BACKGROUND OF THE INVENTION

Hinges are known, both of the elastic type and also of the simple type, which articulate a temple and a lug or front piece of a frame with respect to each other, allowing to maintain an adequate pressure on the user's temples in order to improve wearability.

Traditional hinges generally consist of two articulation elements pivoted to each other and mounted respectively a first on the temple and a second on the lug or front piece of the frame for spectacles.

Each articulation element is made of metal material or plastic material.

In particular, hinges for spectacles are known in which each articulation element comprises on its lower surface anchorage means, for example an anchor, attached by welding or other, which allows the solid assembly of the articulation element on the relative lug or front piece of the frame.

In the field of production of spectacles and their components, there is an ever-growing need to confer on the hinges, and more generally on the frame, particular aesthetic forms, and to affix thereon ornaments, trademarks, logos or other distinctive signs of the producer or the product.

Furthermore, in order to identify with greater certainty the originality of the product, it is more and more frequent to affix ornaments, trademarks, logos or other distinctive signs on parts of the frame, such as for example the hinges, in which, given the extremely limited sizes of the components, the possible reproduction of the distinctive signs is difficult to actuate for a counterfeiter.

Hinges for spectacles are known having a conformation such that the external surfaces have protruding portions, or in any case displayable, from the external surfaces of the relative temples, lugs or front pieces, and on which portions the distinctive signs are etched or made, by mechanical working or directly by molding.

This known solution has very high costs, however, both if made by mechanical working especially due to the working times and the wasted material, and also in the case of direct molding, since in order to obtain a satisfactory quality, expensive molding techniques have to be used, for example of the type known as PIM and MIM.

Furthermore, the known solutions need a specific production of tools, and also a programming of the machine tools or molding equipment, for every identification sign to be etched or made on the articulation elements.

Hinges for spectacles are also known which include portions on which the distinctive signs are made by means of laser etching. This solution too entails very high costs, however.

Purpose of the present invention is to achieve a hinge for spectacles on which ornaments, trademarks, logos or other distinctive signs are made, which is simple and economical to make, and which guarantees an optimum final aesthetic result.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

A hinge for spectacles according to the present invention comprises at least two articulation elements pivoted to each other and mounted respectively on a temple and on a lug or front piece of a frame of said spectacles.

In accordance with said purpose, at least one of the articulation elements comprises at least a positioning seating in which a decorative element is able to be attached.

The decorative element is conformed so as to define at least an attachment portion able to be positioned completely inside or partly outside the seating, so as to define the structural attachment of the decorative element to the articulation element, and a decorative portion at least partly outside the seating, which decorative portion confers a desired aesthetic identity on said articulation element. For example the decorative portion is conformed to identify one or more distinctive signs of the product and/or the producer.

Advantageously, the positioning seating is made on the articulation element so that the decorative portion of the relative decorative element, in the assembled condition of the frame, is positioned in a condition at least partly visible with respect to the relative temple or the relative lug or front piece.

Therefore, the hinge for spectacles according to the present invention comprises at least a decorative element independent from the relative articulation element and able to be attached to the latter in the positioning seating so as to define the relative decoration of the spectacles.

In this way, the articulation element can be made in a standardized manner, since it does not require specific programming of the machine tools or the molding equipment, in order to make the distinctive signs.

In fact, since the decorative element is distinct from the relative articulation element, the positioning seating is conformed in a standardized manner, whereas the decorative element has an attachment portion coordinated with the positioning seating and a decorative portion conformed on each occasion in a different way so as to define the different distinctive signs.

Furthermore, since the decorative element is distinct from the relative articulation element, the decorative element can be made of a different material from the articulation element. In this way, we can have decorative elements made with any color or material, for example metal, plastic, wood, rhinestone, minerals such as precious stones or other.

According to a variant, the positioning seating defines first attachment means, such as hollows, grooves or other, with which coordinated second attachment means cooperate, such as pins, ribs or other, made on the attachment portion of the decorative element, so as to define a structural connection between the decorative element and the relative articulation element.

According to another variant, the positioning seating and the attachment portion have respective surfaces able to be reciprocally glued.

According to another variant, the positioning seating and the attachment portion are reciprocally conformed to be welded to each other.

According to another variant, the articulation element comprises at least a body made of metal material, whereas the decorative element is made of plastic material, to allow a wider range of possible conformations of the decorative element.

### BRIEF DESCRIPTION OF THE DRAWINGS

These and other characteristics of the present invention will become apparent from the following description of some preferential forms of embodiment, given as a non-restrictive example with reference to the attached drawings wherein:
- fig. 1 is an axonometric view of a first form of embodiment of a hinge for spectacles according to the present invention;
- fig. 2 is an exploded axonometric view of an articulation element of the hinge in fig. 1;
- fig. 3 is a partly sectioned lateral view of a variant of the articulation element in fig. 2;
- fig. 4 is an axonometric view of a second form of embodiment of a hinge for spectacles according to the present invention;
- fig. 5 is a partly sectioned lateral view of the articulation element in fig. 4;
- fig. 6 is a lateral view of a third form of embodiment of a hinge for spectacles according to the present invention;
- fig. 7 is an exploded and partly sectioned lateral view of fig. 6;
- fig. 8 is an axonometric view of a fourth form of embodiment of a hinge for spectacles according to the present invention;
- fig. 9 is an exploded view of fig. 8;
- fig. 10 is an axonometric view of a fifth form of embodiment of a hinge for spectacles according to the present invention;
- fig. 11 is an exploded view of fig. 10;
- fig. 12 is an axonometric view of a sixth form of embodiment of a hinge for spectacles according to the present invention;
- fig. 13 is an exploded view of fig. 12;
- fig. 14 is an axonometric view of a seventh form of embodiment of a hinge for spectacles according to the present invention;
- fig. 15 is an exploded view of fig. 14;
- fig. 16 is an axonometric view of an eighth form of embodiment of a hinge for spectacles according to the present invention;
- fig. 17 is an exploded view of fig. 16;
- fig. 18 is a lateral view of a ninth form of embodiment of a hinge for spectacles according to the present invention;
- fig. 19 is an axonometric view of a tenth form of embodiment of a hinge for spectacles according to the present invention;
- fig. 20 is an exploded view of fig. 19.

### DETAILED DESCRIPTION OF SOME PREFERENTIAL FORMS OF EMBODIMENT

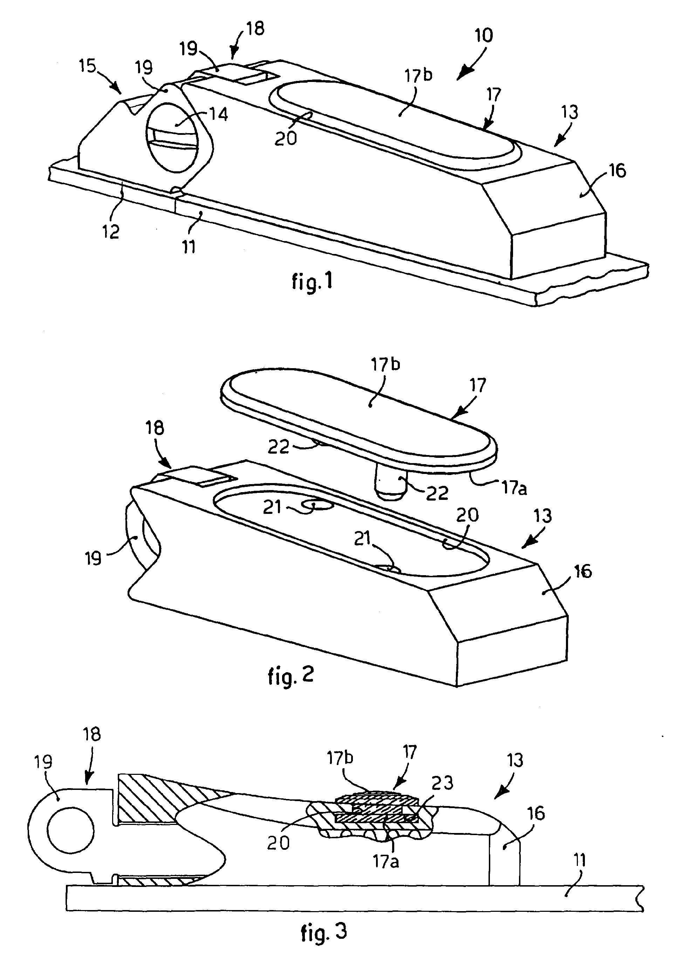

With reference to fig. 1, a hinge for spectacles 10 according to the present invention is applied to reciprocally articulate a temple 11 to a lug 12 or front piece of a frame for spectacles.

In particular, in the form of embodiment shown in figs. 1 and 2, the hinge 10 according to the present invention is of the elastic type and is able to allow not only the reciprocal rotation of the temple 11 and the lug 12 or front piece, but also an elastic extra travel on opening so as to enhance the conditions for putting on and wearing the spectacles.

The hinge 10 traditionally comprises two articulation elements, respectively a first 13, associated with the temple 11, and a second 15, associated with the lug 12 or the front piece.

Each articulation element 13, 15 comprises relative hinging eyelets 19 reciprocally pivoted to each other by means of a pin 14, for example a screw.

In this case, the first articulation element 13 is of the elastic type and comprises a box-like body 16 in which an elastic slider 18 is slidingly housed, the latter defining the hinging eyelet 19.

The box-like body 16 is normally made of metal material and comprises a blind positioning seating 20, made on a visible surface of the box-like body 16. The positioning seating 20 in this case comprises two attachment hollows 21, the functions of which will be explained in more detail hereafter.

The first articulation element 13 also comprises a decorative element 17 made for example of plastic material, and provided with an attachment portion 17a and a decorative portion 17b.

The attachment portion 17a is disposed facing and inside the positioning seating 20, and comprises two pins 22 conformed in coordinated manner with the two hollows 21 of the positioning seating 20.

In this way, inserting the two pins 22 into the two hollows 21 determines a secure structural attachment of the decorative element 17 in the positioning seating 20.

The decorative portion 17b is disposed visible outside the positioning seating 20, and is conformed to identify one or more distinctive signs of the product and/or the producer.

The distinctive signs identifiable on the decorative portion 17b can be for example logos, trademarks, writings, drawings or other, made by etching or silk screen printing, printed or made in relief on the external surface, or defined by the external shaping of the decorative element 17 itself.

In the variant shown in fig. 3, the positioning seating 20 is conformed so as to have relative undercut grooves 23, to guarantee a greater security of the structural attachment of the decorative element 17 and the box-like body 16.

In this variant, the attachment portion 17b of the decorative element 17 can be made of elastically deformable material, so as to be able to be correctly positioned in the undercut groove 23. Alternatively, the whole decorative element 17 can be made by the injection of plastic material directly into the positioning seating 20.

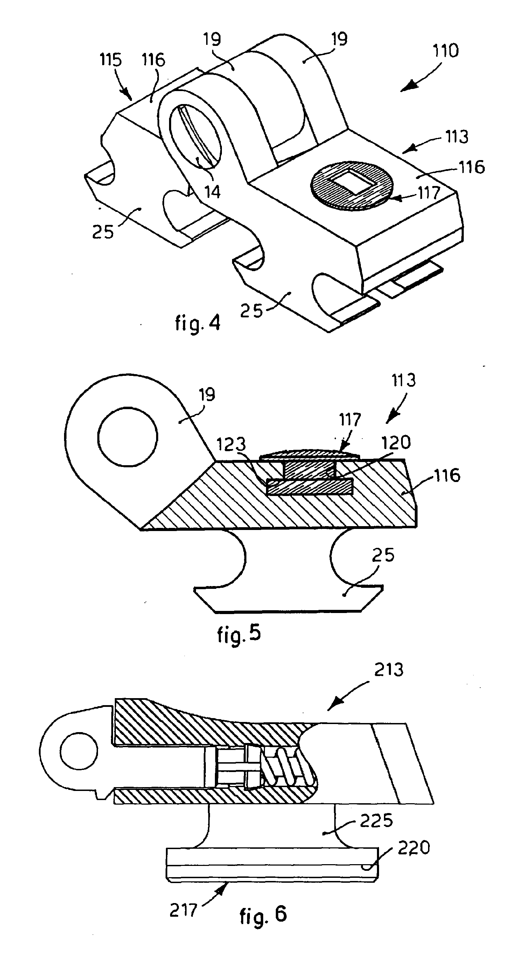

In the form of embodiment shown in figs. 4 and 5, the hinge 110 is of the simple type and each of its articulation elements 113, 115 comprises a rigid body 116 provided on the lower part with anchors 25 anchoring to the relative temple 11 or lug 12.

A positioning seating 120 is made on the body 116 for the attachment of a relative decorative element 117. In this case, the positioning seating 120 comprises an undercut groove 123 to attach the decorative element 117.

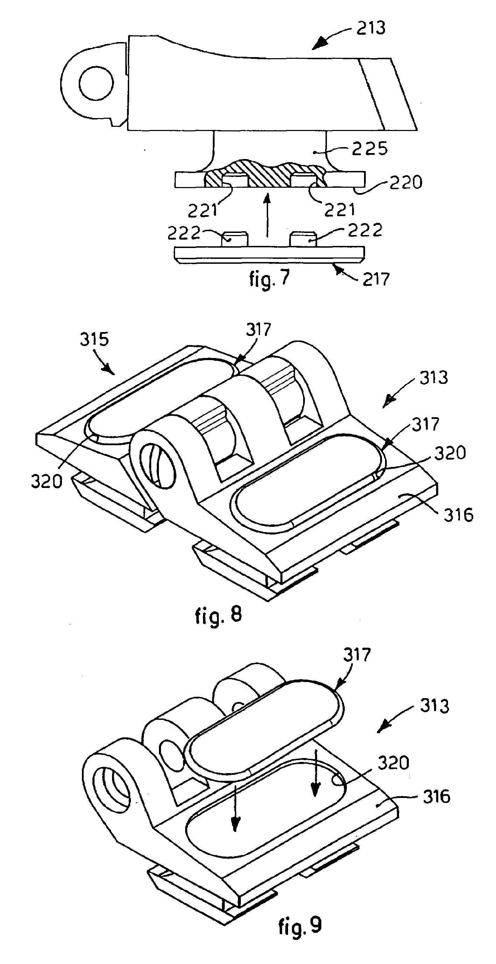

In the form of embodiment shown in figs. 6 and 7, the articulation element 213 is of the elastic type and comprises at the lower part at least an anchor 225. In this case, the positioning seating 220 is defined by the lower surface of the anchor 225, and comprises two attachment hollows 221, into which two corresponding pins 222 of the decorative element 217 are able to be inserted, to define the reciprocal structural attachment.

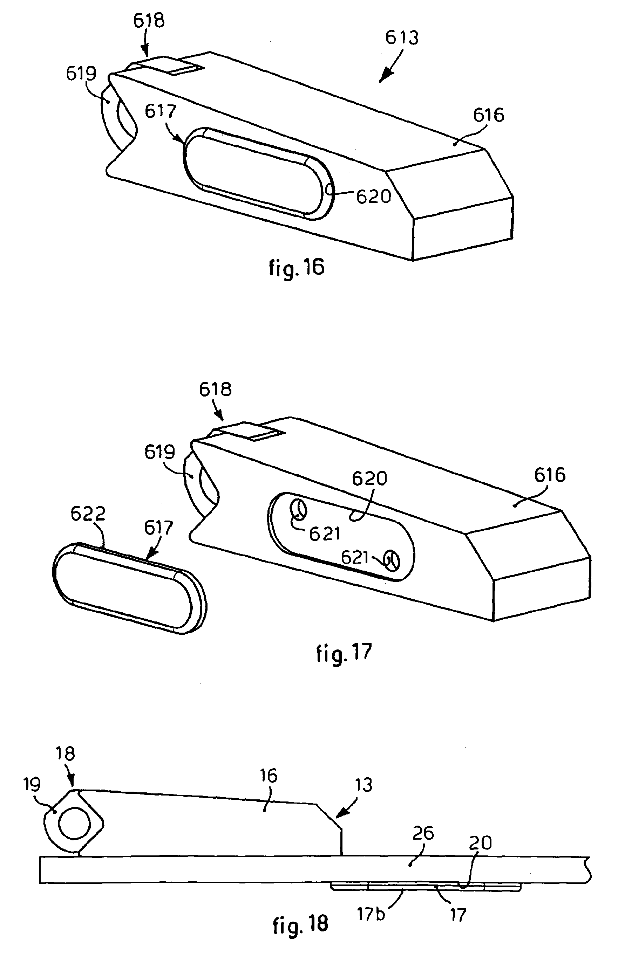

This form of embodiment is only indicative of the fact that the decorative element 217 and the positioning seating 220 need not necessarily be provided in correspondence with the box-like body 216 of the articulation element 213 but, in the case of temples 11 or lugs 12 made of transparent plastic material, the decorative element 217 can also be provided on any other functional or attachment component of the hinge, such as, precisely, the anchors 225, or possible metal cores 26 longitudinal to the temple 11 or other (fig. 18).

In this case, in a condition where the articulation element 213 is partly incorporated into the relative temple 11, the decorative element 217 is completely inside the temple 11, with the advantage that there is no risk of the decorative element 217 being able to become detached from the frame of the spectacles and get lost, or getting ruined over time.

In the form of embodiment shown in figs. 8 and 9, the positioning seating 320 is made on the back of the body 316 of the articulation element 313. In this embodiment, the decorative element 317 is structurally attached to the positioning seating 320 by means of a glue.

In this case, the articulation element 315 also comprises a positioning seating 320, equal to or different from the one made on the articulation element 316, in which the decorative element 317 is attached by gluing.

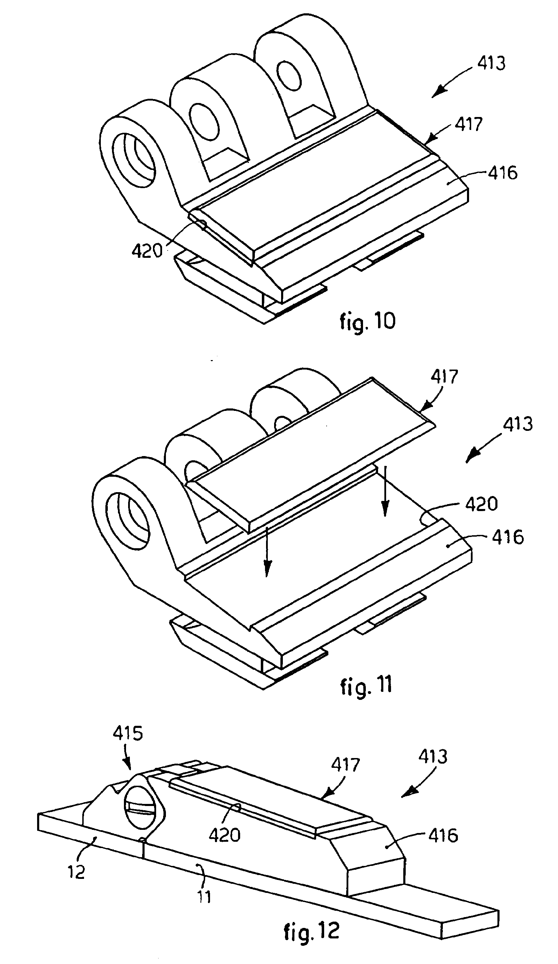

In the forms of embodiment shown in figs. 10, 11, 12 and 13, the positioning seating 420 is made through, transverse to the relative body 416, or box-like body, of the articulation element 413. The decorative element 417 is welded to the positioning seating 420 to guarantee structural continuity of the two.

Alternatively, the decorative element 417 can be applied with interference into the corresponding positioning seating 420.

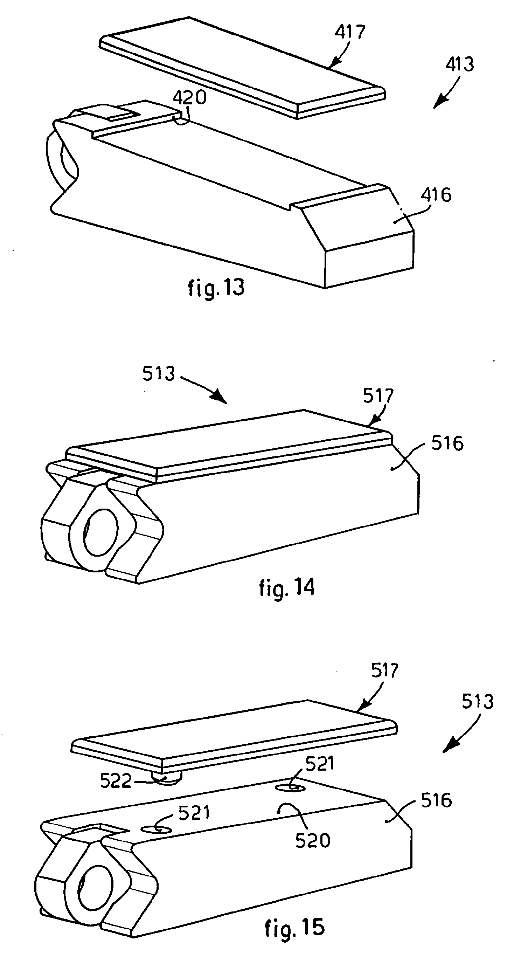

In the form of embodiment shown in figs. 14 and 15, the positioning seating 520 is defined by the upper surface of the body 516 of the articulation element 513. In this case, inside the positioning seating 520 two attachment hollows 521 are made, into which coordinated pins 522 made on the decorative element 517 are able to be inserted.

In the form of embodiment shown in figs. 16 and 17, the positioning seating 620 is made on a lateral flank of the body 616 of the articulation element 613. In this case, inside the positioning seating 620 two attachment hollows 621 are made, into which coordinated pins 622 made on the decorative element 617 are able to be inserted.

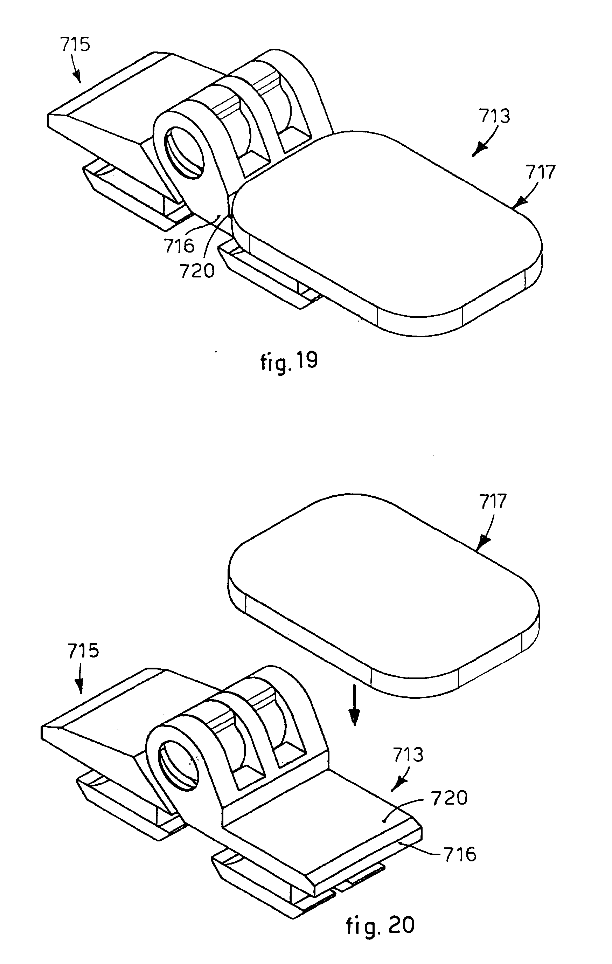

In the form of embodiment shown in figs. 19 and 20, the positioning seating 720 is made on the back of the body 716 of the articulation element 713. In this solution, the decorative element 717 is structurally attached to the positioning seating 720 by welding or gluing.

In this solution, the positioning seating 720 is through, that is, completely open on the back of the body 716 of the articulation element 713 and the decorative element 717 is bigger in size than the positioning seating 720.

It is clear, however, that modifications and/or additions of steps or parts may be made to the hinge 10, 110 as described heretofore, without departing from the field and scope of the present invention.

It is also clear that, although the present invention has been described with reference to specific examples, a person of skill in the art shall certainly be able to achieve many other equivalent forms of articulation element for a hinge for spectacles, decorative element for a hinge for spectacles, and hinge for spectacles, having the characteristics as set forth in the claims and hence all coming within the field of protection defined thereby.

## Claims

1. Articulation element for a hinge for spectacles able to be mounted on a relative component (11, 12) of a frame for said spectacles, **characterized in that** it comprises at least a positioning seating (20, 120, 220, 320, 420, 520, 620, 720) inside which at least a decorative element (17, 117, 217, 317, 417, 517, 617, 717) is able to be attached, said positioning seating (20, 120, 220, 320, 420, 520, 620, 720) being conformed so as to cooperate with a coordinated attachment portion (17a) of the decorative element (17, 117, 217, 317, 417, 517, 617, 717) and to define the structural attachment of the decorative element to the articulation element, and to maintain a decorative portion (17b) of the decorative element at least partly external, so as to confer on the articulation element a desired aesthetic identity.

2. Decorative element for a hinge for spectacles able to be mounted on a relative articulation element (13, 113, 213, 313, 413, 513, 613, 713, 15, 115, 315) of the hinge for spectacles, **characterized in that** it comprises at least an attachment portion (17a) able to cooperate with a positioning seating (20, 120, 220, 320, 420, 520, 620, 720) made on the articulation element (13, 113, 213, 313, 413, 513, 613, 713, 15, 115, 315) and conformed so as to define the structural attachment of the decorative element to the articulation element, and a decorative portion (17b) able to be disposed at least partly outside the positioning seating (20, 120, 220, 320, 420, 520, 620, 720) so as to confer a desired aesthetic identity on said articulation element (13, 113, 213, 313, 413, 513, 613, 713, 15, 115, 315).

3. Hinge for spectacles comprising at least two articulation elements (13, 113, 213, 313, 413, 513, 613, 713, 15, 115, 315) pivoted to each other and mounted on relative components (11, 12) of a frame for said spectacles, **characterized in that** at least one of said articulation elements (13, 113, 213, 313, 413, 513, 613, 713, 15, 115, 315) comprises at least a positioning seating (20, 120, 220, 320, 420, 520, 620, 720) and a decorative element (17, 117, 217, 317, 417, 517, 617, 717), able to be attached in said positioning seating (20, 120, 220, 320, 420, 520, 620, 720) and conformed so as to define at least an attachment portion (17a) able to be positioned completely inside or partly outside said positioning seating (20, 120, 220, 320, 420, 520, 620, 720), so as to define the structural attachment of said decorative element (17, 117, 217, 317, 417, 517, 617, 717) to said articulation element (13, 113, 213, 313, 413, 513, 613, 713, 15, 115, 315), and a decorative portion (17b) able to be positioned at least partly outside said positioning seating (20, 120, 220, 320, 420, 520, 620, 720), so as to confer a desired aesthetic identity on said articulation element (13, 113, 213, 313, 413, 513, 613, 713, 15, 115,315).

4. Hinge as in claim 3, **characterized in that** said positioning seating (20, 120, 220, 320, 420, 520, 620, 720) is made on said articulation element (13, 113, 213, 313, 413, 513, 613, 713, 15, 115, 315) in a position such that said decorative portion (17b) of the relative decorative element (17, 117, 217, 317, 417, 517, 617, 717), in the assembled condition of the frame, is positioned in a condition at least partly visible with respect to the relative component (11, 12) of the frame.

5. Hinge as in claim 3 or 4, **characterized in that** said positioning seating (20, 120, 220, 520, 620) defines first attachment means (21, 221, 521, 621,23, 123) with which cooperate second attachment means (22, 222, 522, 622) made on said attachment portion (17a) of said decorative element (17, 117, 217, 517, 617, 717), so as to define a structural connection between said decorative element (17, 117, 217, 517, 617, 717) and the relative articulation element (13, 113,213, 513, 613, 713, 15, 115).

6. Hinge as in any claim from 3 to 5, **characterized in that** said positioning seating (320, 420) and said attachment portion (17a) comprise respective surfaces able to be reciprocally glued.

7. Hinge as in any claim from 3 to 5, **characterized in that** said positioning seating (320, 420) and said attachment portion (17a) comprise respective surfaces able to be reciprocally welded.

8. Hinge as in any claim from 3 to 5, **characterized in that** said positioning seating (320, 420) and said attachment portion (17a) comprise respective surfaces conformed so as to be reciprocally joined through interference or snap-in attachment.

9. Hinge as in any claim from 3 to 8, **characterized in that** said articulation element (13, 113, 213, 313, 413, 513, 613, 713, 15, 115, 315) comprises at least a body (16, 116, 216, 316, 416, 516, 616, 716) made of metal material, whereas said decorative element (17, 117, 217, 317, 417, 517, 617, 717) is made of plastic material.

10. Hinge as in any claim hereinbefore, **characterized in that** said decorative element (17, 117, 217, 317, 417, 517, 617, 717) is made of metal material.

11. Hinge as in any claim hereinbefore, **characterized in that** said decorative element (17, 117, 217, 317, 417, 517, 617, 717) is made of wood.

12. Hinge as in any claim hereinbefore, **characterized in that** said decorative element (17, 117, 217, 317, 417, 517, 617, 717) is rhinestone.

13. Hinge as in any claim hereinbefore, **characterized in that** said decorative element (17, 117, 217, 317, 417, 517, 617, 717) is at least partly made with a mineral.
